(19) Europäisches Patentamt
European Patent Office
Office européen des brevets

(11) **EP 3 483 590 B1**

(12) **EUROPEAN PATENT SPECIFICATION**

(45) Date of publication and mention
of the grant of the patent:
**12.01.2022 Bulletin 2022/02**

(51) Int Cl.:
*G01N 21/3581* (2014.01)  *G06K 7/10* (2006.01)
*G01N 21/3586* (2014.01)

(21) Application number: **17200858.3**

(22) Date of filing: **09.11.2017**

(54) **IDENTIFICATION AND TAGGING SYSTEM AND METHOD**

IDENTIFIKATIONS- UND MARKIERUNGSSYSTEM UND -VERFAHREN

SYSTÈME ET PROCÉDÉ D'IDENTIFICATION ET D'ÉTIQUETAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.05.2019 Bulletin 2019/20**

(73) Proprietors:
• **Vestel Elektronik Sanayi ve Ticaret A.S.**
**45030 Manisa (TR)**
• **Özyegin Üniversitesi**
**34794 Çekmeköy/ Istanbul (TR)**

(72) Inventors:
• **ÖZBAKIS, Basak**
**45030 Manisa (TR)**
• **MEMISOGLU, Gorkem**
**45030 Manisa (TR)**
• **GÜLBAHAR, Burhan**
**34794 Cekmeköy/Istanbul (TR)**

(74) Representative: **Kehl, Ascherl, Liebhoff & Ettmayr
Patentanwälte Partnerschaft mbB
Emil-Riedel-Straße 18
80538 München (DE)**

(56) References cited:
**US-A1- 2006 231 625    US-A1- 2010 148 050
US-A1- 2015 170 013**

• **HAMDI M ET AL: "New approach for chipless and
low cost identification tag in the THz frequency
domain", RFID-TECHNOLOGIES AND
APPLICATIONS (RFID-TA), 2012 IEEE
INTERNATIONAL CONFERENCE ON, IEEE, 5
November 2012 (2012-11-05), pages 24-28,
XP032299617, DOI:
10.1109/RFID-TA.2012.6404523 ISBN:
978-1-4673-4656-6**

## Description

The present invention relates to an identification and tagging system and method. Further, the present invention also relates to a tag for use in such a system and method.

## Background of the Invention

Identification and tagging systems based on Terahertz radiation are suitable for manifold applications in logistics, point of sale, robot guidance, augmented reality, and many other emerging applications that link physical objects with computing systems. Herein, Terahertz (THz) radiation is considered radiation in the spectral region of 0.1 to 10 THz (wavelengths of approximately 3 mm to 30 $\mu$m).

For use in tagging applications THz radiation has some general advantages as compared to other parts of the electromagnetic spectrum. Other than visible or infrared waves, THz radiation can penetrate into organic materials such as fabrics or plastics. On the other hand, THz radiation does not cause any damage associated with X-rays or other ionizing radiation, as the photon energy involved is relatively low.

The article "New approach for chipless and low cost identification tag in the THz frequency domain" by Hambi et al. published in IEEE 2012 International Conference on RFID suggests a one-dimensional periodic stack of dielectric layers for data encoding in terahertz frequency domain, wherein the encoded information is read by determining a transmission spectrum.

US 2015/0170013 A1 discloses a process of encoding information in a volumetric tag inside a three dimensional physical object during manufacture thereof and reading the encoded information using a terahertz (THz) imaging reader. Therein, the encoded information is read by emitting a pulse of THz radiation toward the tagged object and measuring the reflected pulse from material interfaces resulting from the use of materials with a (relative to each other) high or low respective refractive index. For example, polystyrene (PS) and high density polyethylene (HDPE) are used as materials with different refractive properties for encoding and ABS is used as an enclosure material. Other suitable encoding materials as well as manufacturing methods are also disclosed in US 2015/0170013 A1.

Accordingly, such known systems are based on stacked dielectric media with thicknesses of the same order as terahertz wavelengths.

While this state of the art process is feasible for a wide variety of tagging and identification applications, the amount of information that can be reasonably encoded in tag, i.e. the data storage capacity is limited. In particular, as known terahertz ID tags are based on volumetric thickness of stacked structural defects varying refractive index and layer thickness, such techniques utilize only one dimensional (1D) tagging structures with capacities of tens of bits.

Further, a reader employed in a system of the above prior art can only read one tag at a time, wherein the angle of orientation of the reader relative to the tag is required to be within a given range.

Other THz tags are disclosed in US2010/148050 A1, which suggests a THz tagging/ identification method based on measuring the presence/absence of refracted, diffracted or dispersed radiation, or in US 2015/170013 A1 and US 2006/231625 A1, which disclose a method for encoding information in a volumetric tag comprising a three dimensional, locally differing distribution of at least one encoding material and reading the encoded information using a THz imaging reader.

In view of the above shortcomings, it is an object of the present invention to provide an improved identification and tagging system and method allowing implementations with a higher data storage capacity per tag and/or reading more than one tag at a time by a reader device.

According to one aspect of the invention, a method for reading information encoded by a three-dimensional, locally differing distribution of at least one encoding material (thus defining a three-dimensional tag) is provided, wherein respective transmission spectra of said three-dimensional tag are determined in a frequency band ranging above 0.1 THz in plural, preferably six or more, more preferably 36 or more, respective spatial directions. Accordingly, the frequency band has a lower limit of 0.1 THz or higher and an upper limit of more than 0.1 THz, preferably less than 10 THz.

The skilled person will understand that the number of spatial directions (or, respectively, receiver transmitter pairs as mentioned herein-below) will depend on the desired resolution and the desired ability to classify a block of material with different angles. E.g., implementations are possible, in which tags to be read are generally oriented in essentially the same manner, such as at a conveyor belt, as well as applications in which tags to be read are generally oriented in a random manner.

Accordingly, the of spatial directions can be varied depending on the materials, tag size, resolution etc. in order to create distinct transmission profiles from different angles.

Advantageously, the inventive method allows to determine transmission spectra of more than one tags simultaneously.

In a preferred embodiment, a tag comprising at least three encoding materials having a respective attenuation coefficient different from one another is used as said three-dimensional tag.

Accordingly, in one aspect of the invention, there is provided a three-dimensional tag, comprising at least three encoding materials having a respective attenuation coefficient different from one another.

Preferably, the tag has an essentially cubic shape. Therein, essentially cubic means a shape with six surfaces in three essentially orthogonal spatial directions.

According to another preferred embodiment, the tag comprises an enclosure material having an attenuation coefficient different from the encoding materials.

Tags according to or used for implementations of the present invention can be manufactured using, as encoding materials, a wide variety of materials known per se from the prior art for use in connection with THz applications, such as various crystal materials (e.g. silicon, crystal quartz, and sapphire) and polymers (e.g. polymethylpentene [TPX], polyethylene [PE], polypropylene [PP], and polytetrafluoroethylene [PTFE]).

According to another aspect, the present invention provides a tagging and identification method wherein an item is tagged by providing the item with a three-dimensional, locally differing distribution of at least one encoding material thus defining a three-dimensional tag, and the encoded information is read according to the above described inventive method thereby identifying the tagged item.

According to another aspect, the present invention provides a system for reading information encoded by a three-dimensional, locally differing distribution of at least one encoding material thus defining a three-dimensional tag, wherein the system comprises plural, preferably six or more, more preferably 36 or more, transmitter-receiver pairs configured for determining respective transmission spectra in a frequency band ranging above 0.1 THz of said three-dimensional tag in a plurality of respective spatial directions, and computing means for retrieving the information from the transmission spectra.

Thus, according to the present invention, an essentially spherical arrangement can be set up such that transmitter and receiver pairs are located on opposite surfaces of a sphere along the surface of the sphere. This allows simultaneous scanning to achieve a volumetric image of the tag(s) positioned inside this sphere at an instant.

Generally, THz imaging devices as known per se for example from Savage, V., Schmidt, R., Grossman, T., Fitzmaurice, G., and Hartmann, B., "A series of tubes: adding interactivity to 3D prints using internal pipes." In Proceedings of the 27th annual ACM symposium on User interface software and technology (October 2014), 3-12 can be utilized for implementations of the present invention.

While the prior allows only reading one tag at a time with single scanner, as the known systems are based on reflected waves requiring a line of sight path between the transmitter and tag, the present invention based on transmission techniques allows to read more than one tag at a time: It is possible to detect multiple tags at the same time with a single scan.

The present invention further allows encoding data using a 3D distribution of defects throughout the preferably cubic tag compared with 1D THz tags of the prior art. Therefore, by implementing the present invention the data storage capacity can be improved by three orders of magnitude for a given tag size. Moreover, the invention allows implementation of slice based transmission throughout the tag further improving the identification capability and also further improving the data storage capacity by coding slice based data in addition to the relative position of the defects distributed throughout the tag.

Using multiple receivers around the tag allows processing the received wave coming from different angles. At different slices, both the thickness distribution and the ordering of different defect blocks change. Therefore, data can be encoded by changing the distribution of defect blocks and their thickness based on slice samples at specific angles.

Therein, slices correspond to beams which we can be assume to resemble focused Gaussian beams. However, they are in spherical coordinates.

Further, by changing the temperature or the orientation of a tag, by changing the positions of the materials by some external effects or by making the tag to include mobile units, additional degrees of freedom can be introduced.

If, for example, the optical properties, in the relevant frequency band, of the materials change at different temperatures, the attenuation coefficients will change and they will result in different readings.

As a result, the following degrees of freedom for transmission based reading architecture can be taken advantage of: First, the combinations of different materials at a specific set of spherical angles result in different absorption ratios. Second, the absorption changes at different frequencies in a range of, for example, 0.1-10 THz. Third, the absorption coefficients change at different temperatures.

Employing a database storing tag signatures for varying materials, scanning angles, frequencies and temperature, can map respective readings to a tagging ID.

The present invention thus allows substantially limitless variations of tags in order to enrich the type of the received waveforms, i.e. the signatures of different tags.

While it is possible to use Time Domain Spectroscopy (TDS) essentially as described in US 2015/0170013 A1 (in connection with THz reflection spectra) for retrieving information from the transmission spectra, the present invention can also be advantageously implemented using a spectral encoding approach as described in Bernier, M., Garet, F., Perret, E., Duvillaret, L., and Tedjini, S. "Terahertz encoding approach for secured chipless radio frequency identification" Applied optics 50(23) (2011), 4648-4655, by checking the resonance frequency changes due to defects in the volume. The number of materials can be much higher than in the prior art since the reflection and the reflection angle are not major concerns but the transmission is important, which allows more flexibility in the design.

When implementing the present invention using a TDS approach, the absorbed amount of signal based on the repetitive losses is checked according to the fomula

$$t = s \cdot \exp(\text{abscoeff} \cdot \text{thickness})$$

wherein s is the input radiation intensity, abscoeff is the material absorption coefficient and thickness is the thickness of the material. As, in a volumetric consideration, different combinations of materials result in different received signal strengths, these attenuations can be determined for varying frequencies as a unique signature.

Evaluation of the measurements can be advantageously based on pre-extracting signatures of different combinations of tag materials at different angles (e.g. 36 different angles for 6 different tagging materials in various positions inside a spherical tag) and building a table or waveform library thereof. Whenever a reading for identifying a tag is made, the sampled data is correlated with respective elements of the library and the decoding is realized according to a maximum likelihood algorithm known per se from the prior art (least square method, fuzzy logic algorithm or the like). Generally, any of the embodiments described or options mentioned herein may be particularly advantageous depending on the actual conditions of application. Further, features of one embodiment may be combined with features of another embodiment as far as technically possible and unless indicated otherwise.

In the following, the invention and preferred embodiments thereof will be described in more detail by way of example. The accompanying drawings, which are schematic illustrations only, serve for a better understanding of the features of the present invention.

**Brief Description of the Drawings**

Figs. 1a-1c     schematically illustrate the concept of sliced transmission readings, each of Figs. 1a-1c showing, on the right side, a different orientation of a transmitter receiver pair relative to a cubic tag and, on the left side, a respective transmission spectrum.

Fig. 2     shows a schematic implementation of a system according to the present invention.

**Detailed Description of the Drawings**

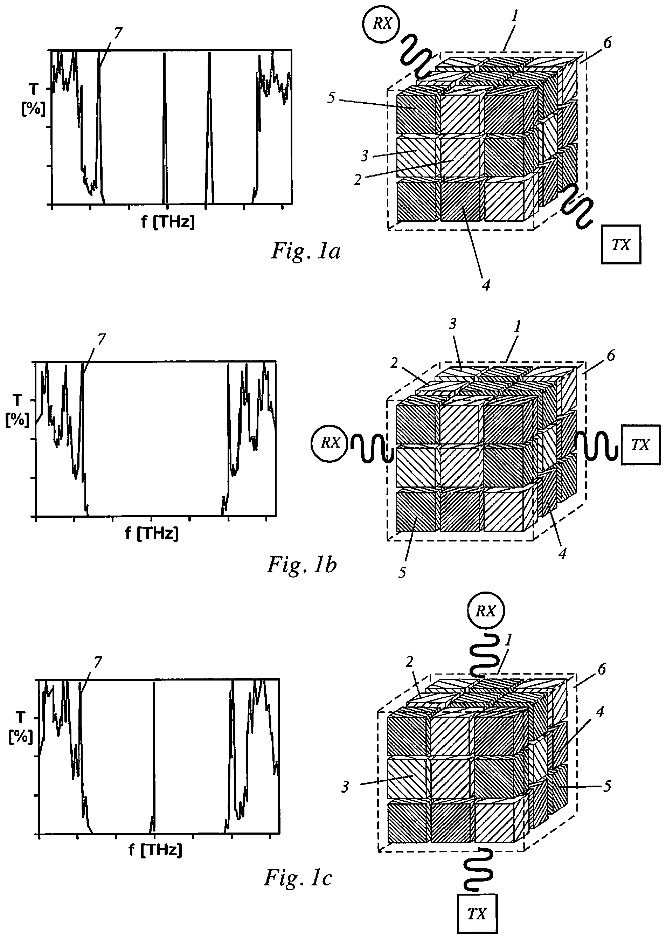

The right hand side of figures 1a-1c depicts a tag 1 including four encoding materials 2, 3, 4 and 5 with locally differing three-dimensional distributions. All four encoding materials 2, 3, 4 and 5 have a respective attenuation coefficient different from one another, such that they allow a different transmission of radiation of a frequency in the Terahertz range (0.1 THz through 10 THz). The encoding materials 2, 3, 4 and 5 are enclosed in the enclosure material 6, e.g. a suitable resin material, having a transmittance for radiation of a frequency in the Terahertz range higher than the encoding materials 2, 3, 4 and 5. The purpose of the enclosure material 6 is protecting the encoding materials 2, 3, 4 and 5 from physical damage.

In an orientation different for each of figures 1a-1c a respective pair of transmitter TX and receiver RX is used for determining a respective transmission spectrum 7. In other words, the optical axes of the respective transmitter receiver pairs TX, RX are oriented at different angles relative to a reference plane (e.g. a surface plane) of the tag 1. The resulting transmission spectra 7 are different for different optical axes, as the distribution of encoding materials 2, 3, 4 and 5 along the respective transmission paths of radiation through the tag 1 is different from axis to axis.

Accordingly, the locally different distribution of encoding materials 2, 3, 4 and 5 makes it possible to encode information on the tag 1 which is identifiable due to a unique signature of resulting transmission spectra 7 as explained above.

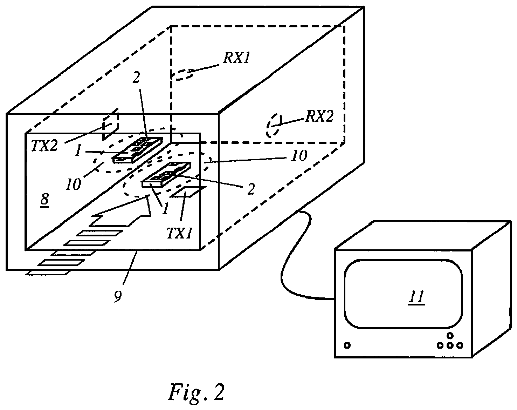

The reader system depicted in Fig. 2 comprises a reader chamber 8 configured to receive, through the opening 9, items 10 tagged with respective tags 1, as indicated by the arrow symbolizing front access of the chamber 8.

In the tags 1, at least one, preferably more encoding materials 2 are distributed three-dimensionally in a locally differing manner in order to produce a unique signature of THz transmission spectra.

In the chamber 8, a plurality of transmitter receiver pairs TX, RX are arranged defining a plurality of optical axes, respectively. Among the transmitter receiver pairs, only a first transmitter receiver pairs TX1, RX1 and a second transmitter receiver pair TX2, RX2 are depicted, the optical axes of which are orthogonal relative to each other.

All transmitter receiver pairs TX1, RX1, TX2, RX2 operate in a THz range (0.1 THz to 10 THz).

The reader chamber 8 is connected to a computer 11 for evaluating receiver signals from the receivers RX1, RX2 in order to retrieve encoded information from transmission spectra represented by the receiver signals.

The computer 11 has stored therein a database of pre-extracting signatures of different combinations of encoding materials 2 at different angles relative to the optical axes of the transmitter receiver pairs TX1, RX1, TX2, RX2. Whenever a reading is made by the receivers RX1, RX2 for identifying a tag 2, the computer 11 correlates receiver signals with respective elements of the database and thus decodes the tags 1 according to a maximum likelihood algorithm.

For building up the database, a reference reader chamber like the reader chamber depicted in Fig. 2 can be used and multiple different tag templates can be scanned by transmitter receiver pairs TX1, RX1, TX2, RX2 of the reference reader chamber in order to create receiver signals that can be stored as respective signatures.

Thus according to the invention, the optical axes of respective transmitter receiver pairs (TX, RX) are oriented at different angles relative to a reference plane (e.g. a surface plane) of the tag 1. The resulting transmission spectra 7 are different for different optical axes, as the distribution of encoding materials 2, 3, 4, 5 along the respective transmission paths of radiation through the tag 1 is different from axis to axis.

**Reference Numerals:**

| | | | |
|---|---|---|---|
| 1 | Tag | 10 | Tagged item |
| 2 | First encoding material | 11 | Computer |
| 3 | Second encoding material | TX | Transmitter |
| 4 | Third encoding material | RX | Receiver |
| 5 | Fourth encoding material | TX1 | Transmitter of first pair |
| 6 | Enclosure material | RX1 | Receiver of first pair |
| 7 | Transmission spectrum | TX2 | Transmitter of second pair |
| 8 | Reader chamber | RX2 | Receiver of second pair |
| 9 | Opening | | |

**Claims**

1. A method for reading information encoded by a locally differing distribution of at least one encoding material (2, 3, 4, 5) thus defining a tag (1),

   wherein said method comprises determining a transmission spectrum (7) of said tag (1) in a frequency band ranging above 0.1 THz,
   **characterized in that**
   said local differing distribution is a three dimensional distribution of said at least one encoding material (2, 3, 4, 5), said tag (1) is a three-dimensional tag (1), and
   said method comprises determining respective transmission spectra (7) including said transmission spectrum (7) in a plurality of respective spatial directions using respective transmitter-receiver pairs (TX1, RX1, TX2, RX2).

2. The method according to claim 1, wherein said transmission spectra (7) are determined in at least 6 different spatial directions.

3. The method according to claim 2, wherein said transmission spectra (7) are determined in at least 36 different spatial directions.

4. A method according to any one of claims 1-3, wherein transmission spectra (7) of more than one tag (1) are determined simultaneously.

5. A method according to any one of claims 1-4, wherein a tag (1) comprising at least three encoding materials (2, 3, 4, 5) having a respective attenuation coefficient different from one another is used as said three-dimensional tag (1).

6. A tagging and identification method comprising tagging an item (10) by providing said item with locally differing distribution of at least one encoding material (2, 3, 4, 5) thus defining a tag (1),

**characterized in that**
said local differing distribution is a three dimensional distribution of said at least one encoding material (2, 3, 4, 5),
said tag (1) is a three-dimensional tag (1), and
said tagging and identification method further comprises
reading the encoded information according to the method of any of claims 1-4 thereby identifying the tagged item (10).

7. Tagging and identification method according to claim 6,
wherein said item (10) is provided with a three-dimensional, locally differing distribution of at least three encoding materials (2, 3, 4, 5) having a respective attenuation coefficient different from one another.

8. System for reading information encoded by a locally differing distribution of at least one encoding material (2, 3, 4, 5) thus defining a tag (1),

wherein said system comprises
a transmitter-receiver pair configured for determining a transmission spectrum of said tag (1) in a frequency band ranging above 0.1 THz,
**characterized in that**
said local differing distribution is a three dimensional distribution of said at least one encoding material (2, 3, 4, 5),
said tag (1) is a three-dimensional tag (1), and **in that** said system comprises a plurality of transmitter-receiver pairs (TX1, RX1, TX2, RX2) including said transmitter-receiver pair which are configured for determining respective transmission spectra (7) including said transmission spectrum (7) in a plurality of respective spatial directions, and
computing means (11) configured to retrieve said information encoded in said three-dimensional tag (1) from said transmission spectra (7).

9. System according to claim 8, wherein said plurality of transmitter-receiver pairs (TX1, RX1, TX2, RX2) comprises at least 6 transmitter-receiver pairs (TX1, RX1, TX2, RX2).

10. System according to claim 9, wherein said plurality of transmitter-receiver pairs (TX1, RX1, TX2, RX2) comprises at least 36 transmitter-receiver pairs (TX1, RX1, TX2, RX2).

11. Three-dimensional tag (1), comprising a locally differing distribution of at least three encoding materials (2, 3, 4, 5) having a respective attenuation coefficient different from one another, for use in the method of claim 5.

12. Three-dimensional tag (1) according to claim 11, said tag (1) having an essentially cubic shape.

13. Three-dimensional tag (1) according to claim 11 or claim 12 further comprising an enclosure material (6) having a respective attenuation coefficient different from the encoding materials (2, 3, 4, 5).

**Patentansprüche**

1. Verfahren zum Lesen von Informationen, die durch eine lokal unterschiedliche Verteilung von mindestens einem Kodiermaterial (2, 3, 4, 5) kodiert sind, wodurch ein Kennzeichen (1) definiert ist,

wobei das Verfahren die Bestimmung eines Übertragungsspektrums (7) des Kennzeichens (1) in einem Frequenzband oberhalb von 0,1 THz umfasst,
**dadurch gekennzeichnet, dass**
die lokal unterschiedliche Verteilung eine dreidimensionale Verteilung des mindestens einen Kodiermaterials (2, 3, 4, 5) ist,
das Kennzeichen (1) ein dreidimensionales Kennzeichen (1) ist, und
das Verfahren das Bestimmen jeweiliger Übertragungsspektren (7) einschließlich des Übertragungsspektrums (7) in mehreren jeweiligen Raumrichtungen unter Verwendung jeweiliger Sender-Empfänger-Paare (TX1, RX1, TX2, RX2) aufweist.

2. Verfahren gemäß Anspruch 1, wobei die Übertragungsspektren (7) in mindestens 6 verschiedenen Raumrichtungen bestimmt werden.

**3.** Verfahren gemäß Anspruch 2, bei dem die Übertragungsspektren (7) in mindestens 36 verschiedenen Raumrichtungen bestimmt werden.

**4.** Verfahren gemäß einem der Ansprüche 1 bis 3, wobei die Transmissionsspektren (7) von mehr als einem Kennzeichen (1) gleichzeitig bestimmt werden.

**5.** Verfahren nach einem der Ansprüche 1 bis 4, wobei als dreidimensionales Kennzeichen (1) ein Kennzeichen (1) verwendet wird, das mindestens drei Kodiermaterialien (2, 3, 4, 5) aufweist, die jeweils einen voneinander verschiedenen Dämpfungskoeffizienten aufweisen.

**6.** Verfahren zur Kennzeichnung und Identifizierung, umfassend

Kennzeichnen eines Gegenstandes (10) durch Versehen des Gegenstandes mit einer lokal unterschiedlichen Verteilung von mindestens einem Kodiermaterial (2, 3, 4, 5), wodurch ein Kennzeichen (1) definiert wird,
**dadurch gekennzeichnet, dass**
die lokal unterschiedliche Verteilung eine dreidimensionale Verteilung des mindestens einen Kodiermaterials (2, 3, 4, 5) ist,
das Kennzeichen (1) ein dreidimensionales Kennzeichen (1) ist, und
das Kennzeichnungs- und Identifizierungsverfahren des Weiteren aufweist
das Lesen der kodierten Information gemäß dem Verfahren gemäß einem der Ansprüche 1-4, wodurch der gekennzeichnete Gegenstand (10) identifiziert wird.

**7.** Verfahren zur Kennzeichnung und Identifizierung gemäß Anspruch 6,
wobei der Gegenstand (10) mit einer dreidimensionalen, lokal unterschiedlichen Verteilung von mindestens drei Kodiermaterialien (2, 3, 4, 5) versehen ist, die einen jeweils voneinander abweichenden Dämpfungskoeffizienten aufweisen.

**8.** System zum Lesen von Informationen, die durch eine lokal unterschiedliche Verteilung mindestens eines Kodiermaterials (2, 3, 4, 5) kodiert sind und so ein Kennzeichen (1) definieren,

wobei das System umfasst
ein Sender-Empfänger-Paar, das so konfiguriert ist, dass es ein Übertragungsspektrum des Kennzeichens (1) in einem Frequenzband von über 0,1 THz bestimmt,
**dadurch gekennzeichnet, dass**
die lokal unterschiedliche Verteilung eine dreidimensionale Verteilung des mindestens einen Kodiermaterials (2, 3, 4, 5) ist,
das Kennzeichen (1) ein dreidimensionales Kennzeichen (1) ist, und
dass das System mehrere Sender-Empfänger-Paare (TX1, RX1, TX2, RX2) einschließlich des Sender-Empfänger-Paares aufweist, die zum Bestimmen jeweiliger Übertragungsspektren (7) einschließlich des Übertragungsspektrums (7) in mehreren jeweiligen Raumrichtungen konfiguriert sind, und
Rechenmittel (11), die so konfiguriert sind, dass sie die in dem dreidimensionalen Kennzeichen (1) kodierten Informationen aus den Übertragungsspektren (7) abrufen.

**9.** System gemäß Anspruch 8, wobei die mehreren Sender-Empfänger-Paare (TX1, RX1, TX2, RX2) mindestens 6 Sender-Empfänger-Paare (TX1, RX1, TX2, RX2) umfassen.

**10.** System gemäß Anspruch 9, wobei die mehreren Sender-Empfänger-Paare (TX1, RX1, TX2, RX2) mindestens 36 Sender-Empfänger-Paare (TX1, RX1, TX2, RX2) umfassen.

**11.** Dreidimensionales Kennzeichen (1) mit einer lokal unterschiedlichen Verteilung von mindestens drei Kodiermaterialien (2, 3, 4, 5), die einen jeweils voneinander verschiedenen Dämpfungskoeffizienten aufweisen, zur Verwendung im Verfahren nach Anspruch 5.

**12.** Dreidimensionales Kennzeichen (1) gemäß Anspruch 11, wobei das Kennzeichen (1) eine im wesentlichen kubische Form aufweist.

**13.** Dreidimensionales Kennzeichen (1) gemäß Anspruch 11 oder Anspruch 12, das ferner ein Umhüllungsmaterial (6) mit einem jeweils von den Codierungsmaterialien (2, 3, 4, 5) verschiedenen Dämpfungskoeffizienten aufweist.

**Revendications**

1. Procédé pour lire des informations codées par une distribution localement différente d'au moins un matériau de codage (2, 3, 4, 5) définissant ainsi une étiquette (1),
dans lequel ledit procédé comprend la détermination d'un spectre de transmission (7) de ladite étiquette (1) dans une bande de fréquence supérieure à 0,1 THz,

   **caractérisé en ce que**
   ladite distribution différentielle locale est une distribution tridimensionnelle dudit au moins un matériau de codage (2, 3, 4, 5),
   ladite étiquette (1) est une étiquette tridimensionnelle (1), et
   ledit procédé comprend la détermination de spectres de transmission respectifs (7) incluant ledit spectre de transmission (7) dans une pluralité de directions spatiales respectives en utilisant des paires émetteur-récepteur respectives (TX1, RX1, TX2, RX2).

2. Procédé selon la revendication 1, dans lequel lesdits spectres de transmission (7) sont déterminés dans au moins 6 directions spatiales différentes.

3. Procédé selon la revendication 2, dans lequel lesdits spectres de transmission (7) sont déterminés dans au moins 36 directions spatiales différentes.

4. Procédé selon l'une quelconque des revendications 1 à 3, dans lequel les spectres de transmission (7) de plus d'une étiquette (1) sont déterminés simultanément.

5. Procédé selon l'une quelconque des revendications 1 à 4, dans lequel une étiquette (1) comprenant au moins trois matériaux de codage (2, 3, 4, 5) ayant un coefficient d'atténuation respectif différent les uns des autres est utilisée comme ladite étiquette tridimensionnelle (1).

6. Procédé d'étiquetage et d'identification comprenant

   l'étiquetage d'un article (10) en fournissant audit article une distribution localement différente d'au moins un matériau de codage (2, 3, 4, 5) définissant ainsi une étiquette (1),
   **caractérisé en ce que**
   ladite distribution localement différente est une distribution tridimensionnelle dudit au moins un matériau de codage (2, 3, 4, 5),
   ladite étiquette (1) est une étiquette tridimensionnelle (1), et
   ledit procédé d'étiquetage et d'identification comprend en outre
   la lecture des informations codées selon le procédé de l'une quelconque des revendications 1 à 4, identifiant ainsi l'article étiqueté (10).

7. Procédé de marquage et d'identification selon la revendication 6,
dans lequel ledit article (10) est pourvu d'une distribution tridimensionnelle, localement différente, d'au moins trois matériaux de codage (2, 3, 4, 5) ayant un coefficient d'atténuation respectif différent les uns des autres.

8. Système pour lire des informations codées par une distribution localement différente d'au moins un matériau de codage (2, 3, 4, 5) définissant ainsi une étiquette (1),

   dans lequel ledit système comprend
   une paire émetteur-récepteur configurée pour déterminer un spectre de transmission de ladite étiquette (1) dans une bande de fréquence supérieure à 0,1 THz,

      **caractérisé en ce que**
      ladite distribution différentielle locale est une distribution tridimensionnelle dudit au moins un matériau de codage (2, 3, 4, 5),
      ladite étiquette (1) est une étiquette tridimensionnelle (1), et
      **en ce que** ledit système comprend une pluralité de paires émetteur-récepteur (TX1, RX1, TX2, RX2) incluant ladite paire émetteur-récepteur qui sont configurées pour déterminer des spectres de transmission respectifs (7) incluant ledit spectre de transmission (7) dans une pluralité de directions spatiales respectives, et

des moyens de calcul (11) configurés pour récupérer lesdites informations codées dans ladite étiquette tridimensionnelle (1) à partir desdits spectres de transmission (7).

9. Système selon la revendication 8, dans lequel ladite pluralité de paires émetteur-récepteur (TX1, RX1, TX2, RX2) comprend au moins 6 paires émetteur-récepteur (TX1, RX1, TX2, RX2).

10. Système selon la revendication 9, dans lequel ladite pluralité de paires émetteur-récepteur (TX1, RX1, TX2, RX2) comprend au moins 36 paires émetteur-récepteur (TX1, RX1, TX2, RX2).

11. Etiquette tridimensionnelle (1), comprenant une distribution localement différente d'au moins trois matériaux de codage (2, 3, 4, 5) ayant un coefficient d'atténuation respectif différent les uns des autres, pour une utilisation dans le procédé de la revendication 5.

12. Etiquette tridimensionnelle (1) selon la revendication 11, ladite étiquette (1) ayant une forme essentiellement cubique.

13. Etiquette tridimensionnelle (1) selon la revendication 11 ou la revendication 12 comprenant en outre un matériau d'enceinte (6) ayant un coefficient d'atténuation respectif différent des matériaux de codage (2, 3, 4, 5).

Fig. 1a

Fig. 1b

Fig. 1c

*Fig. 2*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150170013 A1
- US 2010148050 A1
- US 2015170013 A1
- US 2006231625 A1

**Non-patent literature cited in the description**

- **HAMBI et al.** New approach for chipless and low cost identification tag in the THz frequency domain. *IEEE 2012 International Conference on RFID*
- **SAVAGE, V. ; SCHMIDT, R. ; GROSSMAN, T. ; FITZMAURICE, G. ; HARTMANN, B.** A series of tubes: adding interactivity to 3D prints using internal pipes. *In Proceedings of the 27th annual ACM symposium on User interface software and technology,* October 2014, 3-12
- **BERNIER, M. ; GARET, F. ; PERRET, E., ; DUVILLARET, L. ; TEDJINI, S.** Terahertz encoding approach for secured chipless radio frequency identification. *Applied optics,* 2011, vol. 50 (23), 4648-4655